# EUROPÄISCHE PATENTSCHRIFT

(11) **EP 1 546 213 B1**
(45) Veröffentlichungstag und Bekanntmachung des Hinweises auf die Patenterteilung: **31.05.2006**
(21) Anmeldenummer: 03798168.5
(22) Anmeldetag: 18.09.2003
(51) Int. Cl.: C08F 4/14, C08F 10/10

(54) **VERFAHREN ZUR HERSTELLUNG VON POLYISOBUTEN**
METHOD FOR THE PRODUCTION OF POLYISOBUTENE
PROCEDE DE FABRICATION DE POLYISOBUTENE

(30) Priorität: 19.09.2002 DE 10243576
(43) Veröffentlichungstag der Anmeldung: 29.06.2005
(73) Patentinhaber: BASF Aktiengesellschaft, 67056 Ludwigshafen (DE)
(72) Erfinder: RATH, Hans-Peter, 67269 Grünstadt (DE); HÜFFER, Stephan, 67063 Ludwigshafen (DE); LANG, Gabriele, 68167 Mannheim (DE); LANGE, Arno, 67098 Bad Dürkheim (DE); SCHAUSS, Eckard, 67259 Heuchelheim (DE)
(74) Vertreter: Reitstötter - Kinzebach
(86) Internationale Anmeldenummer: PCT/EP2003/010429
(87) Internationale Veröffentlichungsnummer: WO 2004/029099

(56) Entgegenhaltungen:
- EP-A- 0 807 641
- EP-A- 1 026 175
- WO-A-02/38630
- WO-A-93/10063
- DE-A- 19 825 334
- US-A- 5 286 823

## Beschreibung

Die vorliegende Erfindung betrifft ein Verfahren zur Herstellung von Polyisobuten mit einem Gehalt an endständigen Vinylidengruppierungen von wenigstens 75 mol-%.

Unter endständigen Vinylidengruppierungen oder endständigen Doppelbindungen werden im Sinne der vorliegenden Anmeldung solche Doppelbindungen verstanden, deren Lage im Polyisobutenmakromolekül durch die allgemeine Formel 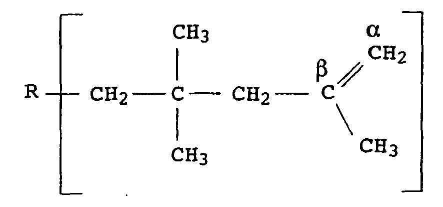 beschrieben wird, in der R für einen Polyisobutenylrest steht. Die Art und der Anteil der im Polyisobuten vorhandenen Doppelbindungen kann mit Hilfe von ¹H oder ¹³C-NMR-Spektroskopie bestimmt werden.

Solche hochreaktiven Polyisobutene werden als Zwischenprodukt zur Herstellung von Additiven für Schmier- und Kraftstoffe verwendet, wie sie beispielsweise in der DE-A 27 02 604 beschrieben sind. Die höchste Reaktivität zeigen die endständigen Vinylidengruppen mit 2-Methyl-Substitution, wohingegen Neopentylsubstitution oder die weiter im Inneren der Makromoleküle liegenden Doppelbindungen je nach ihrer Lage im Makromolekül keine oder nur eine geringe Reaktivität in den üblichen Funktionalisierungsreaktionen zeigen. Der Anteil an endständigen Vinylidengruppierungen im Molekül ist daher das wichtigste Qualitätskriterium für diesen Polyisobutentypus.

Ein weiteres wichtiges Qualitätskriterium für Polyisobutene ist die Breite der Molekulargewichtsverteilung, charakterisiert durch das Verhältnis von gewichtsmittlerem Molekulargewicht M_{w} zu zahlenmittlerem Molekulargewicht Mₙ. Enge Molekulargewichtsverteilungen, d. h. kleine Verhältnisse M_{w}/Mₙ sind bevorzugt.

WO 02/38630 beschreibt ein Verfahren zur Herstellung von Polyisobuten mit einem Anteil an endständigen Vinylgruppen von mehr als 80% unter Verwendung eines Borinfluorid Komplexkatalysators mit tertiären Alkoholen und sekundären Alkylethern.

Die US 5,286,823 beschreibt ein Verfahren zur Herstellung hochreaktiver Polyisobutene durch kationische Polymerisation von Isobuten in Gegenwart von Bortrifluorid und sekundären Alkoholen mit 3 bis 20 Kohlenstoffatomen und/oder Ethern mit 2 bis 20 Kohlenstoffatomen.

Die WO 93/10063 offenbart Bortrifluorid-Etherat-Komplexe, worin der Ether wenigstens über ein an das Ethersauerstoffatom gebundenes tertiäres Kohlenstoffatom verfügt. Die Komplexe dienen zur Polymerisation von Olefinen, insbesondere Isobuten, zu Polymeren mit hohem Gehalt an Vinylidengruppierungen.

Die EP-A 1 026 175 beschreibt die Herstellung von Isobutenpolymeren mit wenigstens 80 mol-% Molekülen mit terminaler Vinylendenstruktur unter Verwendung von Komplexkatalysatoren aus Bortrifluorid, Ether und Alkohol und/oder Wasser in bestimmten Mengen.

Das erzielbare Molekulargewicht des Polyisobutens hängt - neben anderen Faktoren - entscheidend von der auf die eingesetzten Olefinmonomere bezogenen relativen Menge des Bortrifluorid-Komplexkatalysators ab. Mit höheren Katalysatormengen werden niedrigere Molekulargewichte erreicht und umgekehrt. Die erforderliche Menge an Bortrifluorid stellt bei der Herstellung niedermolekularer Polyisobutene einen beträchtlichen Kostenfaktor dar.

Der Erfindung liegt daher die Aufgabe zugrunde, ein Verfahren zur Herstellung von Polyisobuten mit einem hohen Gehalt an endständigen Vinylidendoppelbindungen bereitzustellen, bei dem bei einer gegebenen relativen Menge an Komplexkatalysator niedrigere Molekulargewichte erhalten werden oder die Katalysatormenge verringert werden kann, um ein gegebenes Molekulargewicht zu erhalten. die erhaltenen Polyisobutene sollten zudem eine möglichst enge Molekulargewichtsverteilung aufweisen.

Erfindungsgemäß wird diese Aufgabe gelöst durch ein Verfahren zur Herstellung von Polyisobuten mit einem Gehalt an endständigen Vinylidendoppelbindungen von wenigstens 75 mol-%, bei dem man Isobuten oder isobutenhaltige Kohlenwasserstoffgemische in flüssiger Phase in Gegenwart eines Bortrifluorid-Komplex-Katalysators der Zusammensetzung
a(BF₃) : b(Co1) : c(Co2)
polymerisiert, wobei
- Co1 für wenigstens einen tertiären Alkohol steht,
- Co2 für wenigstens eine unter Wasser, primären Alkoholen, sekundären Alkoholen, Alkancarbonsäuren und Phenolen ausgewählte Verbindung steht,
- das Verhältnis c:b im Bereich von 0,9 bis 1,8, vorzugsweise 0,8 bis 1,2, liegt, und
- das Verhältnis (b+c):a im Bereich von 0,9 bis 3,0, vorzugsweise 1,0 bis 2,5, liegt.

Als Einsatzstoffe (Isobuten-Feedstock) für das erfindungsgemäße Verfahren kommen sowohl Reinisobuten als auch Isobuten-haltige Kohlenwasserstoffmischungen, beispielsweise Butadien-freie C₄-Raffinate aus Crackern oder C₄-Schnitte der Isobutan-Dehydrierung mit Isobutengehalten von mehr als 40 Gew.-% in Frage. Es können inerte Lösungsmittel, wie gesättigte Kohlenwasserstoffe, beispielsweise Pentan, Hexan, Isooctan oder halogenierte Kohlenwasserstoffe, wie Dichlormethan oder Trichlormethan, mitverwendet werden.

Als Katalysatoren werden im erfindungsgemäßen Verfahren Bortrifluorid-Komplexe mit wenigstens zwei Komplexbildnern verwendet, nämlich wenigstens einem tertiären Alkohol und wenigstens einer Verbindung, die unter Wasser, primären Alkoholen, sekundären Alkoholen, Alkancarbonsäuren und Phenolen ausgewählt ist. Die Komplexbildner beeinflussen die Polymerisationsaktivität des Bortrifluorids so, dass die Polymerisation zum einen ein niedermolekulares Polyisobuten ergibt und zum anderen die Isomerisierungsaktivität des Bortrifluorids hinsichtlich der Isomerisierung von endständigen Doppelbindungen zu im Inneren des Polyisobutenmoleküls gelegenen, nicht oder nur wenig reaktiven Doppelbindungen verringert wird.

Geeignete Komplexbildner Co1 sind z.B. tert-Butanol oder 1,1-Dimethyl-1-propanol, wovon tert-Butanol am meisten bevorzugt ist.

Geeignete Komplexbildner Co2 sind Wasser, primäre Alkohole, vorzugsweise C₁- bis C₂₀-Alkohole, sekundäre Alkohole, vorzugsweise C₃- bis C₂₀-Alkohole, Phenole, wie Phenol, das gegebenenfalls einen oder mehrere Alkylsubstituenten trägt, sowie Carbonsäuren, vorzugsweise C₁- bis C₂₀-Carbonsäuren. Als Komplexbildner Co2 sind Wasser, primäre Alkohole, vorzugsweise solche mit 1 bis 10 und insbesondere mit 1 bis 4 C-Atomen, sowie sekundäre Alkohole, vorzugsweise solche mit 3 bis 10 und insbesondere 3 oder 4 C-Atomen, und Mischungen von Wasser mit primären oder sekundären Alkoholen sowie Mischungen primärer mit sekundären Alkoholen bevorzugt. Als Cokomplexbildner Co2 sind primäre sowie sekundäre Alkohole mit maximal 4 C-Atomen besonders bevorzugt, wobei Methanol, Ethanol, 2-Propanol oder 2-Butanol am meisten bevorzugt sind.

Die Bortrifluorid-Komplex-Katalysatoren können vor ihrem Einsatz vorgeformt werden oder vorzugsweise in situ im Polymerisationsreaktor erzeugt werden, wie dies in EP-A 628 575 beschrieben ist. Als Rohstoff zur Herstellung der Bortrifluorid-Komplex-Katalysatoren wird zweckmäßigerweise gasförmiges Bortrifluorid benutzt, wobei technisches, noch geringe Mengen Schwefeldioxid und SiF₄ enthaltendes Bortrifluorid (Reinheit: 96,5 Gew.-%), vorzugsweise aber hochreines Bortrifluorid (Reinheit: 99,5 Gew.-%) verwendet werden kann. Besonders bevorzugt wird Siliciumtetrafluorid-freies Bortrifluorid zur Katalysatorherstellung verwendet.

Pro mol Olefinmonomere setzt man vorzugsweise 0,5 bis 10 mmol Komplexkatalysator, berechnet als Bortrifluorid, ein.

Die Polymerisation des Isobutens erfolgt vorzugsweise nach einem kontinuierlichen Verfahren. Dazu kann in an sich herkömmlichen Reaktoren, wie Rohrreaktoren, Rohrbündelreaktoren oder Rührkesseln gearbeitet werden. Vorzugsweise erfolgt die Polymerisation in einem Schlaufenreaktor, also einem Rohr- oder Rohrbündelreaktor mit stetigem Umlauf des Reaktionsgutes, wobei in der Regel das Verhältnis von Zulauf zu Umlauf Z/U im Bereich von 1:5 bis 1:500, vorzugsweise im Bereich von 1:10 bis 1:200 v/v, variiert werden kann.

Die Polymerisation erfolgt zweckmäßigerweise bei Temperaturen unterhalb 0 °C, vorzugsweise bei Temperaturen im Bereich von 0 bis -40 °C, insbesondere im Bereich von -10 bis -40 °C und besonders bevorzugt im Bereich von -20 bis -40 °C. In der Regel wird die Polymerisation bei einem Druck im Bereich von 0,5 bis 20 bar (absolut) durchgeführt. Die Wahl des Druckbereichs richtet sich in erster Linie nach den verfahrenstechnischen Bedingungen. So empfiehlt es sich bei Rührkesseln, unter Siedekühlung und damit unter Eigendruck, d. h. Unterdruck, zu arbeiten, wohingegen Umlaufreaktoren (Schlaufenreaktoren) bei Überdruck besser arbeiten. Zugleich wird durch Druck und Turbulenz die Bortrifluorideinmischung beschleunigt, so dass dieser Reaktortyp bevorzugt ist. Auf das Resultat der Polymerisationsreaktion ist jedoch die Wahl des Druckes in der Regel unerheblich.

Vorzugsweise wird die Polymerisation unter isothermen Bedingungen durchgeführt. Da die Polymerisationsreaktion exotherm verläuft, muss in diesem Fall die Polymerisationswärme abgeführt werden. Dies geschieht in der Regel mit Hilfe einer Kühlvorrichtung, die beispielsweise mit flüssigem Ammoniak als Kühlmittel betrieben werden kann. Eine andere Möglichkeit besteht darin, die Polymerisationswärme durch Siedekühlung auf der Produktseite des Reaktors abzuführen. Dies geschieht durch Verdampfung des Isobutens und/oder anderer, leicht flüchtiger Bestandteile des Isobuten-Feedstocks. Die Art der Kühlung hängt von dem jeweils verwendeten Reaktortyp ab. Rohrreaktoren werden vorzugsweise mittels Außenkühlung gekühlt, wobei die Reaktionsrohre beispielsweise mittels eines Kühlmantels mit siedendem Ammoniak gekühlt werden. Rührkesselreaktoren werden bevorzugt durch Innenkühlung, z. B. mittels Kühlschlangen, oder durch produktseitige Siedekühlung thermostatisiert.

Die Verweilzeit des zu polymerisierenden Isobutens im Reaktor liegt je nach Reaktionsbedingungen und gewünschten Eigenschaften des herzustellenden Polymerisats im Bereich von 1 bis 120 Minuten, vorzugsweise im Bereich von 5 bis 60 Minuten.

Zur Aufarbeitung wird der Reaktionsaustrag zweckmäßigerweise in ein Medium geleitet, das den Polymerisationskatalysator desaktiviert und auf diese Weise die Polymerisation abbricht. Dazu können beispielsweise Wasser, Alkohole, Ether, Acetonitril, Ammoniak, Amine oder wässrige Lösungen von Mineralbasen, wie Alkalimetall- und Erdalkalimetall-Hydroxidlösungen, Lösungen von Carbonaten dieser Metalle u. ä. verwendet werden. Bevorzugt wird ein. Abbruch mit Wasser bei einer Temperatur von 20 bis 40 °C, beispielsweise in Form einer Druckwäsche. Die Temperatur des verwendeten Wassers richtet sich nach der angestrebten Mischtemperatur, bei der die Phasentrennung stattfindet. Im weiteren Gang der Aufarbeitung wird das Polymerisationsgemisch gegebenenfalls einer oder mehreren Extraktionen zur Entfernung von Restmengen an Katalysator - üblicherweise Methanol- oder Wasserwäschen - unterworfen. Bei der Wasserwäsche wird außer dem Katalysator auch im Zuge der Polymerisation entstandener Fluorwasserstoff entfernt. Anschließend werden destillativ nicht umgesetztes Isobuten, Lösungsmittel und flüchtige Isobutenoligomere abgetrennt. Der Sumpf wird von Resten des Lösungsmittels und Monomeren, beispielsweise über Ringspaltverdampfer oder durch Strangentgasung, befreit.

Es ist außerdem möglich, den eingesetzten Bortrifluorid-Komplex im Reaktoraustrag abzuscheiden, beispielsweise durch Hinzufügen von den als Cokomplexbildnern Co2 genannten primären und sekundären Alkoholen mit 1 bis 4 bzw. 3 oder 4 C-Atomen und/oder Wasser und/oder durch Kühlen, um die Löslichkeit des Bortrifluorid-Komplexes im Reaktoraustrag abzusenken. Der Komplex kann dann zumindest teilweise vom Reaktoraustrag abgetrennt werden und gegebenenfalls nach Anreicherung mit Bortrifluorid und/oder tertiärem Alkohol C1 in den Reaktor zurückgeführt werden. Auf diese Weise kann weiteres Bortrifluorid eingespart werden.

Wird Reinisobuten als Ausgangsstoff verwendet, kann dieses, ebenso wie Isobutenoligomere und Lösungsmittel, in die Polymerisation zurückgeführt werden. Bei Verwendung von isobutenhaltigen C₄-Schnitten werden das nichtumgesetzte Isobuten und die übrigen C₄-Kohlenwasserstoffe im allgemeinen nicht zurückgeführt, sondern anderen Verwendungen zugeführt, beispielsweise der Herstellung von niedermolekularem Polyisobuten oder von Methyl-t-butylether. Leichtflüchtige Fluor-haltige Nebenprodukte, wie sek.- und tert.-Butylfluorid, können vom Polyisobuten zusammen mit den anderen Kohlenwasserstoffen entfernt und destillativ oder extraktiv von diesen Kohlenwasserstoffen abgetrennt werden.

Das erfindungsgemäße Verfahren ermöglicht es, hochreaktive Polyisobutene sowohl aus Reinisobuten als auch aus isobutenhaltigen Kohlenwasserstoffgemischen herzustellen. Durch das erfindungsgemäße Verfahren können zahlenmittlere Molekulargewichte im Bereich von 500 bis 50000 Dalton, vorzugsweise 500 bis 2500 Dalton, bei einem Gehalt an endständigen Doppelbindungen von wenigstens 75 mol-%, vorzugsweise wenigstens 78 mol-%, insbesondere wenigstens 80 mol-% erzielt werden. Darüber hinaus sind die erhaltenen Polyisobutene durch eine enge Molekulargewichtsverteilung charakterisiert. Sie weisen vorzugsweise eine Dispersität M_{w}/Mₙ im Bereich von 1,3 bis 5, insbesondere von 1,2 bis 2, auf.

Die Erfindung wird durch die folgenden Beispiele näher veranschaulicht.

### Beispiele

### Miniplant:

Als Reaktor wurde ein Umlaufreaktor, bestehend aus einem Edelstahlrohr mit einem Innendurchmesser von 4 mm² und einer Länge von 7,1 m und einer Zahnradpumpe mit einer Fördermenge von 50 l/h benutzt; das Gesamtreaktionsvolumen betrug 100 ml. Rohr und Pumpenkopf befanden sich getaucht in einem Kryostaten mit einer Badtemperatur von -15 °C. Die Zuläufe befanden sich auf der Saugseite der Zahnradpumpe, der Reaktorausgang auf der Druckseite über eine Kapillare mit 2 mm Innendurchmesser, 40 cm Länge und Druckhaltung auf 3 bar. Unmittelbar hinter der Druckhaltung befand sich eine Mischpumpe, mittels welcher Wasser zum Reaktionsabbruch eingebracht wurde. In einem Absetzgefäß mit Standhaltung wurde die wässrige Phase bei 20 °C abgetrennt, die organische Phase in einer Adsorptionskolonne über Aluminiumoxid (Verweilzeit 5 Minuten) getrocknet, bevor die organische Phase in zwei Stufen entgast wurde. Die erste Entgasungsstufe arbeitete drucklos bei 150 °C Sumpftemperatur, die zweite Stufe bei 10 mbar und 210 °C Sumpftemperatur. Die Brüden wurden kondensiert und zwei Stunden nach Versuchsbeginn ins Polymerisationssystem zurückgeführt, verbrauchtes Isobuten wurde ergänzt.

### Versuchsdurchführung:

Zu Beginn war die Apparatur mit reinem Hexan gefüllt. Dann wurden 307 g/h Isobuten und 317 g/h Hexan sowie alle weiteren zuläufe zugeführt, wobei die Komplexbildner in Form einer 10%igen Lösung in Hexan dosiert wurden. Bei Verwendung von Wasser als Co-Komplexbildner wurde das Wasser mit dem Isobuten dem Reaktor zugeführt. Es wurde darauf geachtet, dass die Zulaufstelle nicht in die Kühlflüssigkeit des Kryostats eintauchte, damit das Wasser nicht ausgefrieren konnte. Die BF₃-Menge wurde konstant dosiert, die Komplexbildnermenge wurde so reguliert, dass der Umsatz 90 % betrug. Die Polymerisationstemperatur wurde mit der Badtemperatur des Kryostats auf -10 °C eingestellt.

Die nachfolgende Tabelle zeigt die Polymerisationsergebnisse.

| Bsp. | Zuläufe | | | | PIB nach 1 Stunde | | PIB nach 3 Tagen | |
|---|---|---|---|---|---|---|---|---|
| | BF₃ [mmol/h] | tert-Butanol [mmol/h] | Co-Komplexbildner | | Molgewicht M_{N} | Reaktivität [%] | Molgewicht M_{N} | Reaktivität [%] |
| | | | Art | [mmol/h] | | | | |
| 1* | 10 | - | Methanol | 15 | 1150 | 78 | - | - |
| 2* | 10 | - | Ethanol | 17 | 1070 | 82 | - | - |
| 3* | 10 | - | Isoprop. | 18 | 1030 | 85 | - | - |
| 4* | 10 | 12 | - | - | kein stabiler Lauf | | | |
| 5 | 10 | 9 | Methanol | 9 | 790 | 82 | 750 | 85 |
| 5 | 10 | 8 | Methanol Wasser | 5 5 | 800 | 82 | 770 | 85 |
| 6 | 10 | 9 | Isoprop. | 9 | 780 | 85 | 730 | 83 |
| 7* | 10 | 10 | DIPE | 10 | 800 | 83 | 780 | 83 |
| 8* | 10 | 11 | MTBE | 11 | 820 | 84 | 790 | 85 |

| | | | | | | | | |
|---|---|---|---|---|---|---|---|---|
| DIPE = Diisopropylether | | | | | | | | |
| MTBE = Methyl-tert-butylether | | | | | | | | |
| *) nicht erfindungsgemäß | | | | | | | | |

## Patentansprüche

1. Verfahren zur Herstellung von Polyisobuten mit einem Gehalt an endständigen Vinylidengruppierungen von wenigstens 75 mol-%, bei dem man Isobuten oder isobutenhaltige Kohlenwasserstoffgemische in flüssiger Phase in Gegenwart eines Bortrifluorid-Komplex-Katalysators der Zusammensetzung
a(BF₃) : b(Co1) : c(Co2)
polymerisiert, wobei
- Co1 für wenigstens einen tertiären Alkohol steht,
- Co2 für wenigstens eine unter Wasser, primären Alkoholen, sekundären Alkohol, Alkancarbonsäuren und Phenolen ausgewählte Verbindung steht,
- das Verhältnis c:b im Bereich von 0,9 bis 1,8 liegt, und
- das Verhältnis (b+c):a im Bereich von 0,9 bis 3,0 liegt.

2. Verfahren nach Anspruch 1, wobei Co1 für tert-Butanol steht.

3. Verfahren nach Anspruch 1 oder 2, wobei Co2 für Methanol, Ethanol, 2-Propanol oder 2-Butanol steht.

4. Verfahren nach einem der vorhergehenden Ansprüche zur Herstellung von Polyisobuten mit einem zahlenmittleren Molekulargewicht Mₙ von 500 bis 50000 Dalton

## Claims

1. A process for preparing polyisobutene having a content of terminal vinylidene groups of at least 75 mol% by polymerizing isobutene or isobutenic hydrocarbon mixtures in the liquid phase in the presence of a boron trifluoride complex catalyst of the composition
a(BF₃) : b(Co1) : c(Co2)
where
- Co1 is at least one tertiary alcohol,
- Co2 is at least one compound selected from water, primary alcohols, secondary alcohol, alkanecarboxylic acids and phenols,
- the c:b ratio is in the range from 0.9 to 1.8, and
- the (b+c): a ratio is in the range from 0.9 to 3.0,

2. The process according to claim 1, wherein Co1 is tert-butanol.

3. The process according to claim 1 or 2, wherein Co2 is methanol, ethanol, 2-propanol or 2-butanol.

4. The process according to any of the preceeding claims for preparing polyisobutene having a number-average molecular weight Mₙ of from 500 to 50 000 daltons.

## Revendications

1. Procédé de préparation de polyisobutène présentant une teneur en groupements vinylidène terminaux d'au moins 75 % en mole, dans lequel on polymérise de l'isobutène ou des mélanges d'hydrocarbures contenant de l'isobutène, en phase liquide, en présence d'un catalyseur à base de complexe de trifluorure de bore de la composition :
a(BF₃) : b(Co1) : c(Co2)
où
- Co1 représente au moins un alcool tertiaire,
- Co2 représente au moins un composé choisi parmi de l'eau, des alcools primaires, un alcool secondaire, des acides alcanecarboxyliques et des phénols,
- le rapport c/b est de l'ordre de 0,9 à 1,8, et
- le rapport (b+c)/a est de l'ordre de 0,9 à 3,0.

2. Procédé suivant la revendication 1, dans lequel Co1 représente du butanol tertiaire.

3. Procédé suivant la revendication 1 ou 2, dans lequel Co2 représente du méthanol, de l'éthanol, du 2-propanol ou du 2-butanol.

4. Procédé suivant l'une des revendications précédentes, pour la préparation de polyisobutène présentant un poids moléculaire moyen numérique Mₙ de 500 à 50 000 Daltons.
